# FASCICULE DE BREVET EUROPEEN

(11) **EP 1 009 003 B1**
(45) Date de publication et mention de la délivrance du brevet: **14.01.2004**
(21) Numéro de dépôt: 99410160.8
(22) Date de dépôt: 16.11.1999
(51) Int. Cl.: H01H 47/00, H02H 1/06

(54) **Dispositif de commande d'un électro-aimant, avec un circuit d'alimentation alimenté par le courant de maintien de l'électro-aimant**
Einrichtung zur Steuerung eines Elektromagneten, mit von Haltestrom gespeisten Stromversorgung
Control device for an electromagnet, with a power supply powered by the holding current of the electromagnet

(30) Priorité: 07.12.1998 FR 9815553
(43) Date de publication de la demande: 14.06.2000
(73) Titulaire: Schneider Electric Industries SAS, 92500 Rueil-Malmaison (FR)
(72) Inventeur: Durif, Ghislain, 38050 Grenoble cedex 09 (FR)
(74) Mandataire: Jouvray, Marie-Andrée

(56) Documents cités:
- EP-A- 0 353 533
- US-A- 5 754 386

## Description

L'invention concerne un dispositif de commande et un électro-aimant, l'ensemble comportant au moins une bobine de maintien connectée en série avec un interrupteur électronique aux bornes d'une tension d'alimentation de la bobine, des moyens de mesure du courant de maintien circulant dans la bobine de maintien, des moyens de commande de l'électro-aimant, comportant des moyens de régulation du courant de maintien, connectés aux moyens de mesure du courant de maintien et à une électrode de commande de l'interrupteur électronique, et des moyens d'alimentation des moyens de commande.

Les disjoncteurs comportent généralement un certain nombre d'auxiliaires électriques et, plus particulièrement des électro-aimants de fermeture (XF) ou d'ouverture. Deux types d'électro-aimants d'ouverture, ou déclencheurs voltmétriques, sont généralement prévus. Ils comportent un électro-aimant qui doit être actionné lorsque certaines conditions devant provoquer l'ouverture du disjoncteur sont réunies. Un déclencheur à minimum de tension (MN) provoque l'ouverture du disjoncteur lorsque la tension du réseau à protéger descend au-dessous d'un certain seuil, et un déclencheur à émission de courant (MX) provoque l'ouverture du disjoncteur lorsque la tension du réseau dépasse un autre seuil.

Pour la commande d'un électro-aimant, il est connu (FR-A-2.133.652) de fournir temporairement un courant d'appel, relativement élevé, suivi d'un courant de maintien plus faible. Ceci peut être réalisé aussi bien avec un dispositif comportant une seule bobine, dans laquelle le courant est haché pour constituer le courant de maintien, qu'avec un double bobinage constitué par une bobine d'appel et une bobine de maintien. Il est également connu d'asservir les courants d'appel et de maintien à des niveaux de consigne prédéterminés (Voir FR-A-2.568.715, montrant un ensemble selon le préambule de la revendication 1). Ce dispositif est alimenté par un circuit d'alimentation qui dissipe une puissance non négligeable et, de ce fait, est à la fois coûteux et encombrant.

L'alimentation en tension des circuits d'un dispositif de commande d'un électro-aimant peut nécessiter la production d'une tension d'alimentation auxiliaire. Le document EP-A-353.533 propose d'utiliser pour cela les tensions induites dans une bobine de commande de l'électro-aimant lors du blocage de transistors connectés en série avec la bobine. Ce mode de réalisation ne permet pas de réguler le courant circulant dans la bobine car une partie de ce courant est dérivée vers le circuit d'alimentation.

L'invention a pour but un dispositif permettant de réguler simplement le courant de maintien tout en fournissant, à bon marché et dans un volume réduit, les tensions d'alimentation nécessaires au dispositif.

Selon l'invention, ce but est atteint par le fait que les moyens d'alimentation des moyens de commande sont connectés en série avec la bobine de maintien et l'interrupteur électronique de manière à être alimentés par le courant de maintien, les moyens de mesure du courant de maintien comportant un circuit de mesure connecté en parallèle sur les moyens d'alimentation et comportant, en série, un interrupteur électronique additionnel et une résistance de mesure, les moyens de commande étant connectés aux bornes de la résistance et à une électrode de commande de l'interrupteur électronique additionnel, de manière à rendre périodiquement conducteur l'interrupteur électronique additionnel.

D'autres avantages et caractéristiques ressortiront plus clairement de la description suivante de modes particuliers de réalisation, donnés à titre d'exemples non limitatifs et représentés sur les dessins annexés dans lesquels :
Les figures 1 et 2 représentent deux dispositifs de commande selon l'art antérieur.
La figure 3 illustre un premier mode de réalisation d'un dispositif selon l'invention.
La figure 4 illustre les éléments additionnels du dispositif selon la figure 3 dans un second mode de réalisation comportant une bobine d'appel.
La figure 5 illustre un mode de réalisation particulier de l'adaptateur de tension du dispositif selon la figure 3.
La figure 6 représente une variante de réalisation du circuit d'alimentation du dispositif selon la figure 3.

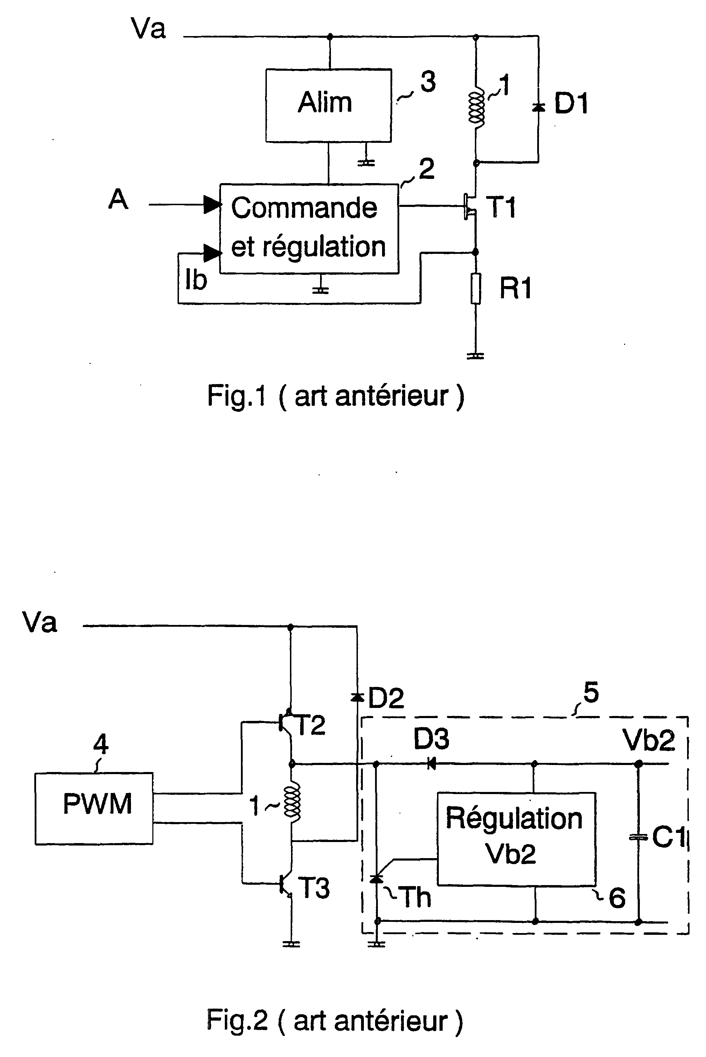

Le dispositif selon la figure 1, qui est du type décrit dans le document FR-A-2.568.715 comporte une bobine 1 connectée en série avec un transistor T1 et une résistance de mesure R1 aux bornes d'une tension d'alimentation Va. Classiquement, une diode de roue libre D1 est connectée en parallèle sur la bobine 1. Un circuit 2 de commande et de régulation est connecté à une électrode de commande du transistor T1. Une entrée du circuit 2 reçoit des signaux A de commande de l'électro-aimant. Le circuit 2 est également connecté aux bornes de la résistance R1 de manière à recevoir des signaux Ib représentatifs du courant circulant dans la bobine 1 lorsque le transistor T1 est conducteur. Le circuit 2 permet ainsi à la fois de commander le dispositif et d'asservir le courant dans la bobine à des valeurs prédéterminées, indépendantes de la tension d'alimentation Va. Un circuit 3 d'alimentation, connecté aux bornes de la tension Va fournit au circuit 2 une tension d'alimentation auxiliaire Vb1 stabilisée.

Dans le dispositif selon la figure 1, le circuit d'alimentation 3 dissipe une puissance qui n'est pas négligeable. A titre d'exemple, si le courant d'alimentation qu'il doit fournir est de l'ordre de 4mA et si la tension Va atteint 500V, la puissance dissipée par le circuit d'alimentation peut atteindre 2W. La bobine de l'électro-aimant dissipant classiquement une puissance de l'ordre de quelques watts, le volume relatif du circuit d'alimentation est disproportionné. L'utilisation d'un circuit d'alimentation 3 à découpage pourrait éventuellement permettre de limiter sa consommation, mais ne résoudrait ni le problème de coût, ni celui du volume.

Le dispositif selon la figure 2, qui est du type décrit dans le document EP-A-353.533 comporte une bobine 1 connectée en série avec deux transistors T2 et T3 aux bornes de la tension d'alimentation Va. Un circuit 4 de commande, du type à modulation de largeur d'impulsions (PWM), est connecté aux électrodes de commande des transistors T2 et T3. Un circuit d'alimentation 5 permet de dériver de la tension Va une tension d'alimentation auxiliaire Vb2, qui est négative dans le mode de réalisation représenté à la figure 2. Le point commun à la bobine 1 et au collecteur du transistor T3, de type NPN, est connecté à la tension Va par l'intermédiaire d'une diode D2, tandis que le point commun à la bobine 1 et au collecteur du transistor T2, de type PNP, est connecté à la masse par l'intermédiaire d'un thyristor TH. Le thyristor TH est utilisé pour réguler la tension d'alimentation auxiliaire Vb2 qui apparaît aux bornes d'un condensateur C1 connecté, en série avec une diode D3, aux bornes d'un thyristor TH. Un circuit 6 de régulation de la tension Vb2 est connecté en parallèle sur le condensateur C1 et fournit à la gâchette du thyristor TH des signaux de commande du thyristor. Lorsque le transistor T2 passe de l'état conducteur à l'état bloqué, sous la commande du circuit 4, une tension est induite dans la bobine 1. Ceci se traduit par une tension négative à la cathode de la diode D3, qui charge ainsi négativement le condensateur C1. Lorsque la tension désirée est obtenue aux bornes du condensateur C1, le circuit 6 de régulation de la tension Vb2 maintient cette tension à la valeur désirée par l'intermédiaire du thyristor TH.

Dans le circuit selon la figure 2, il n'est pas possible d'asservir le courant circulant dans la bobine à une valeur prédéterminée en utilisant une mesure du courant par une résistance disposée en série avec celle-ci comme dans le dispositif selon la figure 1. En effet, une partie du courant circulant dans la bobine est déviée vers le circuit d'alimentation 5.

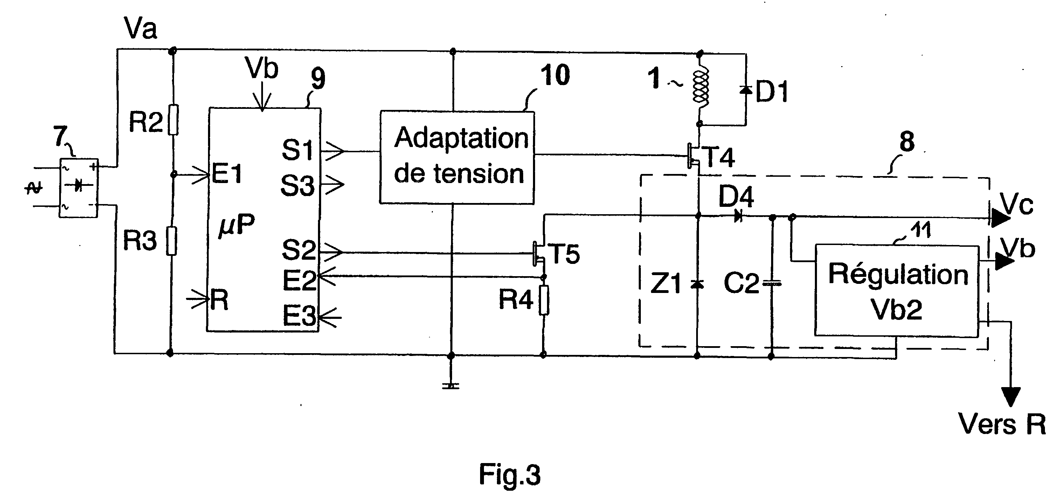

Dans le mode de réalisation de l'invention selon la figure 3, le dispositif de commande est connecté par un pont redresseur double-alternance 7 à une tension alternative. Le pont redresseur fournit la tension d'alimentation Va d'au moins une bobine 1. Dans un mode de réalisation préférentiel, le dispositif est un dispositif à double bobinage avec une bobine d'appel (non représentée sur la figure 3) et une bobine de maintien constituée par la bobine 1 de la figure 3.

La bobine 1 est connectée en série avec un transistor T4, de type MOS sur la figure, et un circuit d'alimentation 8 qui fournit deux tensions d'alimentation auxiliaires Vb et Vc.

La commande de l'électro-aimant est réalisée par un circuit à microprocesseur 9. Sur la figure 3, il comporte une entrée E1 connectée au point milieu d'un diviseur de tension, constitué par deux résistances R2 et R3 connectées en série aux bornes de la tension d'alimentation Va. Le dispositif peut ainsi être utilisé pour la commande d'un électro-aimant d'un déclencheur voltmétrique, la tension aux bornes de R3, représentative de la tension appliquée à l'entrée du pont redresseur 7, pouvant être comparée par le microprocesseur à des seuils prédéterminés, minimum, pour un déclencheur à minimum de tension, ou maximum, pour un déclencheur à émission de courant.

Une sortie S1 du circuit à microprocesseur 9 est connectée à l'électrode de commande du transistor T4 par l'intermédiaire d'un adaptateur de tension 10, lui-même alimenté par la tension Va. Le circuit à microprocesseur 9 contrôle l'état du transistor T4 d'une part en fonction de la valeur de la tension aux bornes de la résistance R3 et, d'autre part, de manière à asservir le courant de maintien dans la bobine 1 à une valeur prédéterminée. Pour réaliser cet asservissement, ou régulation du courant de maintien, le circuit à microprocesseur 9 nécessite une mesure de ce courant. Pour cela, le dispositif comporte un circuit de mesure connecté en parallèle sur le circuit d'alimentation 8. Le circuit de mesure comporte une résistance de mesure R4 connectée en série avec un transistor T5, de type MOS sur la figure. L'électrode de commande du transistor T5 est connectée à une sortie S2 du circuit 9, tandis que la tension aux bornes de la résistance de mesure R4 est appliquée à une entrée E2 du circuit 9.

Dans le mode de réalisation particulier de la figure 3, le circuit d'alimentation 8 comporte une diode Zener Z1 connectée en série avec la bobine 1 et le transistor T4 aux bornes de la tension d'alimentation Va. Une diode D4 est connectée, en série avec un condensateur C2, aux bornes de la diode Zener Z1. Un circuit 11 de régulation de la tension d'alimentation auxiliaire Vb est connecté en parallèle sur le condensateur C2.

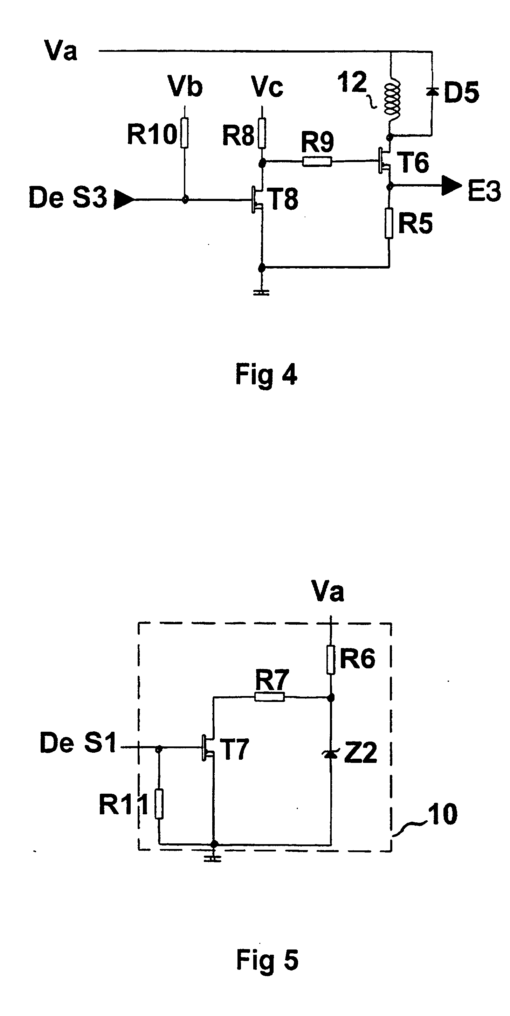

Sur la figure 3, la tension d'alimentation auxiliaire Vb est appliquée à une entrée d'alimentation du circuit à microprocesseur 9. La tension auxiliaire d'alimentation Vc, non régulée, est la tension aux bornes du condensateur C2. Elle peut être utilisée pour la commande d'une bobine d'appel comme cela sera explicité plus en détail au regard de la figure 4. Dans un mode de réalisation préférentiel, Vb est voisine de 5V tandis que Vc est de l'ordre de 10V.
Le dispositif selon la figure 3 fonctionne de la manière suivante. Le passage d'un courant de maintien régulé dans la bobine 1 est contrôlé par le circuit à microprocesseur 9. Lorsque le transistor T4 est conducteur, le courant de maintien développe aux bornes de la diode Zener Z1 une tension prédéterminée, de l'ordre de 10V par exemple, qui charge le condensateur C2 par l'intermédiaire de la diode D4. On obtient ainsi la tension d'alimentation auxiliaire Vc, non régulée, aux bornes du condensateur C2. Cette tension est appliquée au circuit 11 de régulation de Vb, qui peut être de tout type connu, par exemple un régulateur linéaire, de manière à fournir la tension d'alimentation auxiliaire Vb.

Périodiquement, de façon préférentielle toutes les 312µs, le circuit à microprocesseur 9 applique simultanément sur ses sorties S1 et S2 des signaux de commande de conduction des transistors T4 et T5 pendant le temps nécessaire à la mesure de tension aux bornes de la résistance R4. Le transistor T5 étant conducteur, la tension appliquée aux bornes de la diode Zener Z1 c'est à dire à l'entrée du circuit d'alimentation 8, diminue, par exemple à une valeur voisine de quelques volts (3V par exemple). Le courant de maintien n'alimente plus le circuit d'alimentation mais la diode D4 polarisée en inverse, empêche la décharge du condensateur C2 à travers le transistor T5. Le courant de maintien circulant dans la bobine passe alors intégralement, par l'intermédiaire du transistor T5, à travers la résistance de mesure R4. Le circuit à microprocesseur 9 obtient ainsi périodiquement à son entrée E2 une mesure représentative du courant de maintien. Cette mesure est utilisée par le circuit à microprocesseur 9 pour réguler le courant de maintien. Si le courant de maintien est inférieur ou égal à une valeur de consigne prédéfinie, le circuit 9 maintient le transistor T4 conducteur jusqu'à la mesure suivante. Par contre, si le courant de maintien est supérieur à la valeur de consigne, le transistor T4 est bloqué jusqu'à la mesure suivante.

Le circuit d'alimentation 8 de la figure 3 ne dissipe qu'une puissance très faible, de l'ordre de 20mW pour un courant d'alimentation de 4mA sous une tension Vb de 5V, indépendamment du niveau de la tension Va.

Le dispositif selon la figure 3 peut être complété par les éléments additionnels représentés à la figure 4. Dans ce mode de réalisation, le dispositif comporte de plus une bobine d'appel 12 connectée en série avec un transistor T6 et une résistance de mesure R5 aux bornes de la tension d'alimentation Va. Une diode de roue libre D5 est connectée en parallèle sur la bobine 12. Le circuit à microprocesseur 9 comporte une sortie S3 de commande destinée à contrôler le passage d'un courant d'appel dans la bobine d'appel 12. Sur les figures 3 et 4, ce courant peut être régulé de manière classique par le circuit à microprocesseur 9 qui reçoit sur une entrée E3 des signaux représentatifs de la tension aux bornes de la résistance de mesure R5, c'est à dire des signaux représentatifs du courant d'appel circulant dans la bobine d'appel 12.

Les signaux de commande en provenance du circuit à microprocesseur 9 sont des signaux très basse tension, par exemple de l'ordre de 5V, tandis que la tension d'alimentation Va des bobines 1 et 12 peut atteindre 220V ou même 500V. Ceci nécessite l'interposition d'adaptateurs de tension entre les sorties S1 et S2 et les électrodes de commande des transistors T4 et T6.

Un mode particulier de réalisation, de type connu, de l'adaptateur de tension 10 de la figure 3 est représenté à la figure 5. Il comporte une résistance haute-tension R6 connectée en série avec une diode Zener Z2 aux bornes de la tension d'alimentation Va. Une résistance R7 est connectée en série avec un transistor T7, en parallèle avec la diode Zener Z2. L'électrode de commande du transistor T7 est connectée à la sortie S1 du circuit à microprocesseur 9. Le point commun aux résistances R6 et R7 et à la diode Zener Z2 forme la sortie de l'adaptateur de tension, connectée à l'électrode de commande du transistor T4. Lorsque le niveau de signaux logiques appliqués en S1 est bas (par exemple OV), le transistor T7 est bloqué et l'électrode de commande du transistor T8 est à un niveau élevé, correspondant à la tension de limitation de la diode Zener Z2, supérieure à la tension Vc. A titre d'exemple, la tension de limitation de la diode Zener Z2 peut être de l'ordre de 18V. Le transistor T4 est alors conducteur. Par contre, si le niveau des signaux logiques appliqués en S1 est élevé (par exemple 5V), le transistor T7 conduit et court-circuite la diode Zener Z2, ramenant l'électrode de commande du transistor T4 à un niveau bas et bloquant en conséquence le transistor T4.

Un circuit du même type pourrait être utilisé entre la sortie S3 et l'électrode de commande du transistor T6. Cependant, un tel circuit nécessitant l'utilisation d'une résistance haute-tension R6 et d'une diode Zener Z2 est encombrant. Le mode de réalisation particulier de la figure 4 permet d'écarter cet inconvénient en utilisant comme tension d'alimentation de l'adaptateur de tension la tension d'alimentation auxiliaire Vc fournie par le circuit d'alimentation 8. Il est à noter que la tension d'alimentation auxiliaire Vb, de l'ordre de 5V, ne serait pas suffisante pour faire commuter le transistor T6. Par contre, la tension Vc, de l'ordre de 10V est tout à fait appropriée. L'adaptateur de tension de la figure 4 comporte deux résistances R8 et R9 connectées en série entre la tension d'alimentation auxiliaire Vc et l'électrode de commande du transistor T6. Un transistor T8, de type MOS, est connecté entre le point commun aux résistances R8 et R9 et la masse. L'électrode de commande du transistor T8 est connecté à la sortie S3 et à la tension d'alimentation auxiliaire Vb par l'intermédiaire d'une résistance R10. Lorsque les signaux logiques appliqués en S3 sont à un niveau bas, le transistor T8 est bloqué et le transistor T6 devient conducteur. Par contre, lorsque les signaux logiques appliqués en S3 sont à un niveau haut, le transistor T8 est conducteur et bloque le transistor T6.

Le circuit 11 de régulation de la tension d'alimentation auxiliaire peut également comporter (fig. 3) une sortie connectée à une entrée R d' initialisation ("reset") du circuit à microprocesseur 9, de manière à réinitialiser le microprocesseur lorsque sa tension d'alimentation Vb descend au dessous d'un certain seuil.

A la mise sous tension du dispositif, le circuit à microprocesseur 9 est automatiquement initialisé. Ses ports d'entrée/sortie sont à une impédance élevée. A la figure 4, une résistance R11 connectée entre l'électrode de commande de transistor T7 et la masse, fixe le potentiel de cette électrode à OV bloquant le transistor T7, ce qui rend le transistor T4 conducteur. Il y a donc automatiquement charge du condensateur C2, ce qui garantit le démarrage du dispositif.

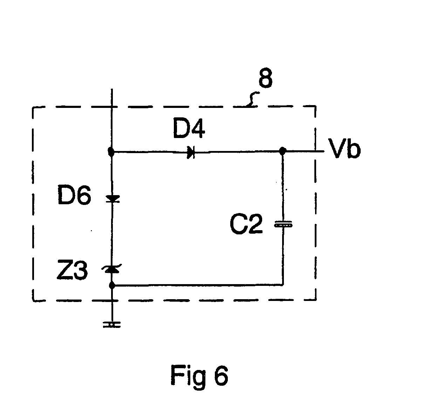

Les microprocesseurs récents intègrent souvent la fonction de réinitialisation en cas de baisse de leur tension d'alimentation. Dans ce cas, la sortie du circuit 11 connectée à l'entrée R du circuit 9 n'est plus indispensable et la tension Vb n'a plus à être aussi précise. Il est alors possible de simplifier le circuit d'alimentation 8. Une variante simplifiée est illustrée à la figure 6.

Sur la figure 6, le circuit de régulation 11 est supprimé, la diode Zener Z1 remplacée par un circuit comportant en série une diode D6, normalement conductrice, et une diode Zener Z3 dont la tension de seuil est égale à la tension d'alimentation auxiliaire Vb désirée, par exemple, de l'ordre de 5V. La diode D6 permet de compenser l'effet des variations de température sur la tension de la diode D4.

Si le dispositif de commande comporte le circuit d'alimentation 8 simplifié de la figure 6, la tension d'alimentation auxiliaire Vc n'est plus disponible pour l'alimentation de l'adaptateur de tension de la figure 4. La tension aux bornes de la diode Zener Z2 de l'adaptateur de tension 10 (figure 5) peut être utilisée en remplacement de la tension d'alimentation auxiliaire Vc.

Pour décrocher l'électro-aimant, il est nécessaire d'interrompre le courant dans les bobines d'appel et de maintien pendant au moins 15ms. La suppression du courant de maintien qui fournit la tension d' alimentation Vb du circuit à microprocesseur 9 pose le problème du maintien de cette alimentation pendant cette période. A titre d'exemple, si le circuit à microprocesseur 9 consomme 4mA, le maintien de son alimentation pendant 15ms implique l'utilisation d'un condensateur C2 (figure 3) de taille importante, donc encombrant. Selon un perfectionnement de l'invention, pour permettre de réduire la taille du condensateur C2, le dispositif de commande provoque, dès envoi d'un ordre de décrochage commandant le blocage du transistor T4, le passage du microprocesseur dans un mode particulier de veille, dit mode STOP. En mode STOP, le circuit à microprocesseur a une consommation très réduite, par exemple de l'ordre de quelques microampères (1 à 10µA). Le condensateur C2 n'étant plus chargé par le courant de maintien, il se décharge lentement. Lorsque la tension Vb descend au dessous d'un seuil prédéterminé, le microprocesseur est automatiquement réinitialisé, soit par le circuit 11 de régulation, soit par lui-même, soit par tout circuit de comparaison approprié. Cette réinitialisation provoque automatiquement, comme en phase de mise sous tension, le passage des ports d'entrée/sortie du microprocesseur en haute impédance et, en conséquence, la mise en conduction du transistor T4, la charge du condensateur C2 et la remontée de la tension d'alimentation auxiliaire Vb. Cependant, le condensateur C2 est dimensionné pour que la réinitialisation du microprocesseur se fasse toujours après les 15ms nécessaires au décrochage de l'électro-aimant. Celui-ci étant décroché, le passage d'un courant de maintien dans la bobine 1 lors de la réinitialisation est insuffisant pour provoquer son accrochage, qui nécessite un courant d'appel plus important.

Dans la description ci-dessus, la bobine 1 est une bobine de maintien et la bobine 12 (fig. 4) une bobine d'appel. L'invention s'applique également dans le cas où le dispositif ne comporte qu'une bobine (1) jouant à la fois le rôle de bobine d'appel et de bobine de maintien en fonction du courant qui circule dans la bobine, le circuit 9 à microprocesseur régulant le courant de maintien à un niveau prédéterminé inférieur au courant d'appel.

Le dispositif selon la figure 3, dans lequel les signaux appliqués à l'entrée E1 du circuit à microprocesseur 9 sont représentatifs de la tension du réseau à protéger, est plus particulièrement adapté à la commande des déclencheurs voltmétriques (MN ou MX). L'invention s'applique à tout type d'électro-aimant et, en particulier, également aux électro-aimants de fermeture d'un disjoncteur, un signal de commande approprié étant alors appliqué sur l'entrée E1.

## Revendications

1. Dispositif de commande et électro-aimant, l'ensemble comportant au moins une bobine de maintien (1) connectée en série avec un interrupteur électronique (T4) aux bornes d'une tension (Va) d'alimentation de la bobine, des moyens de mesure du courant de maintien circulant dans la bobine de maintien (1), des moyens de commande de l'électro-aimant, comportant des moyens de régulation du courant de maintien, connectés aux moyens de mesure du courant de maintien et à une électrode de commande de l'interrupteur électronique (T4), et des moyens (8) d'alimentation des moyens de commande, **caractérisé en ce que** les moyens d'alimentation (8) des moyens de commande sont connectés en série avec la bobine de maintien (1) et l'interrupteur électronique (T4) de manière à être alimentés par le courant de maintien, les moyens de mesure du courant de maintien comportant un circuit de mesure connecté en parallèle sur les moyens (8) d'alimentation des moyens de commande et comportant, en série, un interrupteur électronique additionnel (T5) et une résistance de mesure (R4), les moyens de commande (9, 10) étant connectés aux bornes de la résistance et à une électrode de commande de l'interrupteur électronique additionnel (T5), de manière à rendre périodiquement conducteur l'interrupteur électronique additionnel.

2. Ensemble selon la revendication 1, **caractérisé en ce que** les moyens (8) d'alimentation comportent une diode Zener (Z1, Z3) en série avec la bobine de maintien (1) et l'interrupteur électronique (T4), et une diode (D4) connectée en série avec un condensateur (C2) aux bornes de la diode Zener.

3. Ensemble selon la revendication 2, **caractérisé en ce que** les moyens d'alimentation comportent une diode (D6) en série avec la diode Zener (Z3).

4. Ensemble selon la revendication 2, **caractérisé en ce que** les moyens d'alimentation comportent un circuit (11) de régulation de tension en parallèle sur le condensateur (C2).

5. Ensemble selon l'une quelconque des revendications 1 à 4, **caractérisé en ce que** les moyens de commande comportent un circuit (9) à microprocesseur.

6. Ensemble selon la revendication 5, **caractérisé en ce que** les moyens de commande comportent un circuit adaptateur de tension (10) connecté entre une sortie (SI) du circuit (9) à microprocesseur et l'électrode de commande de l'interrupteur électronique (T4).

7. Ensemble selon l'une des revendications 5 et 6, **caractérisé en ce que** le circuit (9) à microprocesseur passe dans un mode de veille lorsqu'il fournit à l'électro-aimant un ordre de décrochage.

## Claims

1. A control device and electromagnet, the assembly comprising at least one holding coil (1) connected in series with an electronic switch (T4) to the terminals of a supply voltage (Va) of the coil, means for measuring the holding current flowing in the holding coil (1), control means for controlling the electromagnet comprising means for regulating the holding current connected to the means for measuring the holding current and to a control electrode of the electronic switch (T4), and power supply means (8) of the control means, **characterized in that** the power supply means (8) of the control means are connected in series with the holding coil (1) and the electronic switch (T4) in such a way as to be supplied by the holding current, the means for measuring the holding current comprising a measuring circuit connected in parallel with the power supply means (8) of the control means and comprising, in series, an additional electronic switch (T5) and a measuring resistor (R4), the control means (9, 10) being connected to the terminals of the resistor and to a control electrode of the additional electronic switch (T5) in such a way as to turn the additional electronic switch on periodically.

2. Assembly according to claim 1, **characterized in that** the power supply means (8) comprise a Zener diode (Z1, Z3) in series with the holding coil (1) and the electronic switch (T4), and a diode (D4) connected in series with a capacitor (C2) to the terminals of the Zener diode.

3. Assembly according to claim 2, **characterized in that** the power supply means comprise a diode (D6) in series with the Zener diode (Z3).

4. Assembly according to claim 2, **characterized in that** the power supply means comprise a voltage regulation circuit (11) in parallel with the capacitor (C2).

5. Assembly according to any one of the claims 1 to 4, **characterized in that** the control means comprise a microprocessor-based circuit (9).

6. Assembly according to claim 5, **characterized in that** the control means comprise a voltage matching circuit (10) connected between an output (S1) of the microprocessor-based circuit (9) and the control electrode of the electronic switch (T4).

7. Assembly according to one of the claims 5 and 6, **characterized in that** the microprocessor-based circuit (9) switches to a standby mode when it supplies an unlatching order to the electromagnet.

## Patentansprüche

1. Anordnung mit einer Steuereinrichtung und einem Elektromagneten, die mindestens eine Haltespule (1), welche in Reihe mit einem elektronischen Schalter (T4) an die Klemmen einer Versorgungsspannung (Va) der Spule angeschlossen ist, Meßmittel zur Messung des in der Haltespule (1) fließenden Haltestroms, Steuermittel zur Betätigung des Elektromagneten, die mit den Haltestrom-Meßmitteln und einer Steuerelektrode des elektronischen Schalters (T4) verbundene Haltestrom-Regelmittel umfassen, sowie Mittel zur Stromversorgung (8) der Steuermittel umfaßt, welche Anordnung **dadurch gekennzeichnet ist, daß** die Mittel (8) zur Stromversorgung der Steuermittel mit der Haltespule (1) und dem elektronischen Schalter (T4) in Reihe geschaltet sind, so daß sie mit dem Haltestrom gespeist werden, wobei die Haltestrom-Meßmittel eine parallel zu den Stromversorgungsmitteln (8) der Steuermittel geschaltete Meßschaltung mit einem zusätzlichen elektronischen Schalter (T5) und einem in Reihe dazu geschalteten Meßwiderstand (R4) umfassen und die Steuermittel (9, 10) an die Klemmen des Widerstands sowie eine Steuerelektrode des zusätzlichen elektronischen Schalters (T5) angeschlossen sind, derart daß der zusätzliche elektronische Schalter (T5) in regelmäßigen Zeitabständen in den Durchlaßzustand geschaltet wird.

2. Anordnung nach Anspruch 1, **dadurch gekennzeichnet, daß** die Stromversorgungsmittel (8) eine mit der Spule (1) und dem elektronischen Schalter (T4) in Reihe geschaltete Zenerdiode (Z1, Z3) sowie eine in Reihe mit einem Kondensator (C2) an die Klemmen der Zenerdiode geschaltete Diode (D4) umfassen.

3. Anordnung nach Anspruch 2, **dadurch gekennzeichnet, daß** die Stromversorgungsmittel eine in Reihe mit der Zenerdiode (Z3) geschaltete Diode (D6) umfassen.

4. Anordnung nach Anspruch 2, **dadurch gekennzeichnet, daß** die Stromversorgungsmittel eine parallel zum Kondensator (C2) geschaltete Spannungsregelschaltung (11) umfassen.

5. Anordnung nach irgendeinem der Ansprüche 1 bis 4, **dadurch gekennzeichnet, daß** die Steuermittel eine Mikroprozessorschaltung (9) umfassen.

6. Anordnung nach Anspruch 5, **dadurch gekennzeichnet, daß** die Steuermittel eine Spannungsanpasserschaltung (10) umfassen, die zwischen einen Ausgang (S1) der Mikroprozessorschaltung (9) und die Steuerelektrode des elektronischen Schalters (T4) geschaltet ist.

7. Anordnung nach einem der Ansprüche 5 und 6, **dadurch gekennzeichnet, daß** die Mikroprozessorschaltung (9) nach Aussendung eines Abfallbefehls an den Elektromagneten in einen Energiesparmodus schaltet.
